# Europäisches Patentamt

# European Patent Office

# Office européen des brevets

(11) Veröffentlichungsnummer: **0 045 438**
**A1**

(12) **EUROPÄISCHE PATENTANMELDUNG**

(21) Anmeldenummer: 81105746.2

(22) Anmeldetag: 21.07.81

(51) Int. Cl.³: **G 06 F 3/04**
**G 06 F 3/06**

(30) Priorität: 31.07.80 DE 3029136

(43) Veröffentlichungstag der Anmeldung:
10.02.82 Patentblatt 82/6

(84) Benannte Vertragsstaaten:
AT BE CH FR GB IT LI NL SE

(71) Anmelder: COMPUTER GESELLSCHAFT KONSTANZ MBH
Max-Strohmeyer-Strasse 116
D-7750 Konstanz(DE)

(72) Erfinder: Denk, Hans, Dipl.-Ing.
Berchenstrasse 66
D-7750 Konstanz(DE)

(72) Erfinder: Kohmann, Ludwig
Breitlestrasse 5
D-7760 Radolfszell 18(DE)

(72) Erfinder: Egger, Armin, Dipl.-Ing.
Landwehrweg 17
D-6380 Bad Homburg(DE)

(74) Vertreter: Mehl, Ernst, Dipl.-Ing. et al,
Postfach 22 01 76
D-8000 München 22(DE)

(54) **Steuerschaltung für an eine Datenverarbeitungsanlage anschliessbare Peripheriegeräte.**

(57) Parallel zu dem zwischen Prozessor und Geräteschnittstelle verlaufenden Bus-System ist ein Steuerwortpuffer (OP-FIFO) eingeschaltet, der in zeitunkritischen Phasen mit Steuerbefehlsfolgen belegbar ist. Die direkte bzw. die unter Zwischenspeicherung im Steuerwortpuffer (OP-FIFO) indirekte Ansteuerung der Schnittstelle erfolgt durch zwei Befehlsdecodierer, von denen der eine (DEC-C-Bus) zwischen dem Steuerbus (C-BUS) des Bus-Systems und dem Eingang des Steuerwortpuffers (OP-FIFO) und der andere (DEC-OP-FIFO) zwischen dem Ausgang des Steuerwortpuffers (OP-FIFO) und einem im Bereich der Schnittstelle vorgesehenen Schaltmittel eingeschaltet ist.

COMPUTER GESELLSCHAFT
KONSTANZ mbH

Unser Zeichen
VPA
80 P 8 0 3 6 E

Steuerschaltung für an eine Datenverarbeitungsanlage anschließbare Peripheriegeräte

Die Erfindung bezieht sich auf eine Steuerschaltung gemäß dem Oberbegriff des Hauptanspruchs.

Es ist bekannt, daß Peripheriegeräte, insbesondere Magnetplattenspeicher an die Hard- und Firmware der Datenverarbeitungsanlage extreme Zeitbedingungen stellen, die auch von sehr schnell arbeitenden Prozessoren nicht immer erfüllt werden können.

Es ist deshalb Aufgabe der vorliegenden Erfindung, für dieses Problem eine möglichst einfache und voll befriedigende Lösung anzugeben.

Diese Aufgabe wird erfindungsgemäß mit den kennzeichnenden Merkmalen des Hauptanspruchs gelöst. Die erfindungsgemäße Aufteilung in sofort auszuführende und später, d.h. plattensynchron auszuführende Operationen hat den Vorteil, daß dem Prozessor nur die zeitunkritischen Operationen zugeordnet werden, während für die zeitkritischen Operationen ein extrem spezialisierter "Prozessor" in Form des Steuerwortpuffers einschließlich der dazu notwendigen Steuerung zur Verfügung steht.

Vorteilhafte Weiterbildungen der Erfindung sind in den Unteransprüchen angegeben.

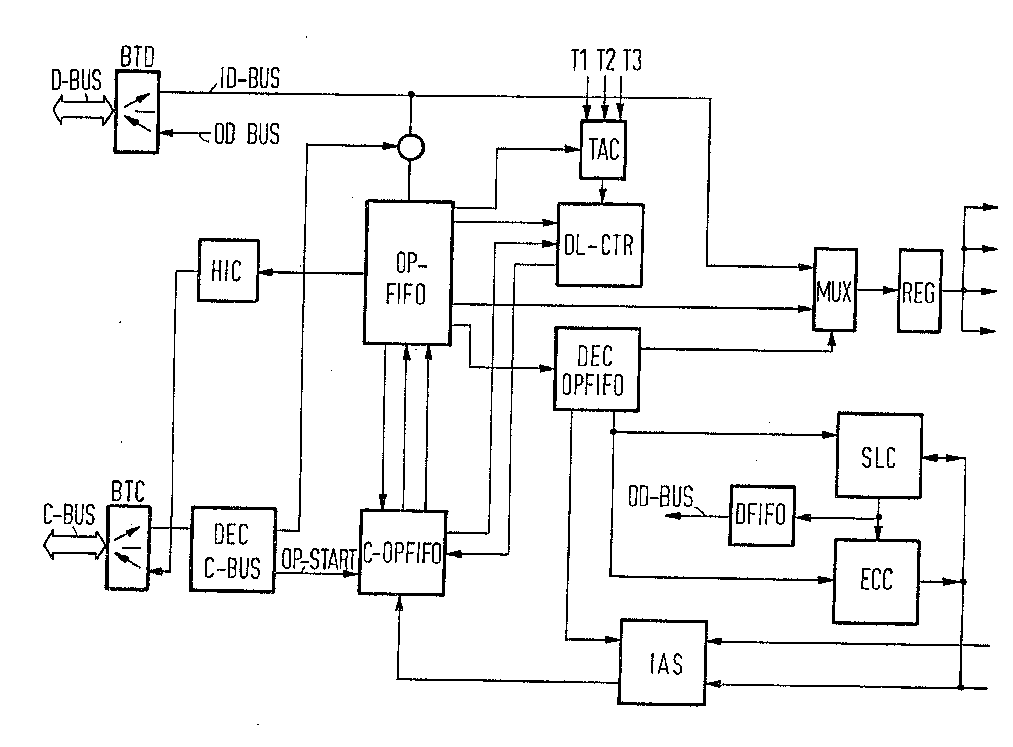

Im folgenden wird ein Ausführungsbeispiel der Erfindung anhand der Zeichnung näher erläutert.

Sta 1 Stl / 24.07.80

Das in der Zeichnung dargestellte Blockschaltbild zeigt den prinzipiellen Aufbau einer Steuerschaltung für den Anschluß von Magnetplattenspeichern an eine Datenverarbeitungsanlage. Dieses Schaltbild zeigt im linken Teil ein Bus-System mit Datenbus D-BUS und Steuerbus C-BUS, die jeweils über Bus-Transceiver BTD, BTC in ein internes Bus-System übergehen. Über die internen Ein- und Ausgangsdatenbusse ID-BUS, OD-BUS erfolgt dann das Laden bzw. Lesen der speichernden Elemente der Steuerschaltung. Der interne Eingangs-Datenbus ID-BUS ist deshalb sowohl mit dem Eingang eines einem Steuerregister REG vorgeschalteten Multiplexers MUX als auch mit dem Eingang eines Steuerwortpuffers OP-FIFO verbunden. Ein Ausgang dieses Steuerwortpuffers OP-FIFO wiederum ist mit dem zweiten Eingang des Multiplexers MUX verbunden. Das Steuerregister REG kann somit entweder direkt über den internen Datenbus ID-Bus oder in zeitkritischen Phasen vom Steuerwortpuffer OP-FIFO geladen werden. Gesteuert wird dies durch zwei Befehlsdecodierer DEC-C-BUS, DEC-OP-FIFO, von denen der eine (DEC-C-BUS) zwischen dem C-BUS-Transceiver BTC und dem Eingang des Steuerwortpuffers OP-FIFO die Eingabe in den Steuerwortpuffer steuert und der andere (DEC-OP-FIFO) zwischen dem Ausgang des Steuerwortpuffers OP-FIFO und dem zweiten Steuereingang des Multiplexers MUX die Steuerung der Schnittstelle übernimmt. Der zweite Befehlsdecodierer DEC-OP-FIFO steuert ferner eine Schreib/Lese-Steuerung SLC sowie eine Fehlerkorrekturschaltung ECC. Die Schreib/Lese-Steuerung SLC wandelt die von den Laufwerken der Magnetplattenspeicher ankommenden Datenimpulse in Datenbytes um (Lesebetrieb) bzw. setzt diese Datenbytes im Schreibbetrieb in serielle Datenimpulse um. Mit einer Befehlsdecodierung aus dem Steuerwortpuffer OP-FIFO wird entschieden, ob die Daten in den Datenpuffer D-FIFO des Steuerwortpuffers OP-FIFO geschrieben werden oder nicht. Auf diese Daten kann nur zugegriffen werden, wenn sie in diesem Datenpuffer D-FIFO geschrieben wurden. Als drittes wird durch den Befehlsdecodierer DEC-OP-FIFO die Möglichkeit gesteuert, daß die Steuerschaltung auf bestimmte Ereignisse wartet. Dies sind die Such-Befehle, die in einer Erkennungslogik IAS auf Index, Adreßmarke oder Sync-Byte synchronisieren. Der Ablauf, das heißt die Steuerung der zeitlichen Abfolge bei der Abarbeitung der im Steuerwortpuffer OP-FIFO gespeicherten Befehlswörter wird durch eine besondere Steuerung C-OP-FIFO übernommen. Dabei wird das jeweils nächste Befehlswort stets dann in Bearbeitung genommen, wenn

a) die im Befehlswort enthaltene Datenlänge in einem Datenlängenzähler DL-CTR auf Null heruntergezählt ist, oder

b) ein Sucherergebnis eingetroffen ist.

Der Takt für den Datenlängenzähler DL-CTR wird vom Steuerwortpuffer OP-FIFO über eine Taktauswahlsteuerung TAC entweder aus den systemeigenen Takten T1 und T2 oder einem plattenspeichersynchronen Takt T3 ausgewählt.

Zur Synchronisierung des Ein/Ausgabe-Prozessors ist ferner eine Unterbrechungssteuerung HIC vorgesehen, die gesteuert durch den Steuerwort-Puffer OP-FIFO, ein Unterbrechungssignal über den Steuerbus C-BUS an den Ein/Ausgabeprozessor der Datenverarbeitungsanlage sendet.

Im folgenden wird die Funktion der Steuerschaltung am Beispiel einer Leseoperation näher erläutert.

Auslösendes Moment ist ein Leseauftrag für ein bestimmtes Laufwerk eines Magnetplattenspeichers, wobei dieser Leseauftrag von der Zentraleinheit beispielsweise an den Ein/Ausgabeprozessor gesendet wird. Die Bearbeitung dieses Auftrages gliedert sich in zeitunkritische und zeitkritische Teile, dergestalt, daß zunächst die zeitunkritischen Teile, z.B. das Adressieren des jeweiligen Laufwerks, die Positionierung der Leseköpfe usw. erledigt werden und daß danach die zur Bearbeitung der zeitkritischen Phase nötige Befehlsfolge in den Steuerwortpuffer OP-FIFO eingegeben wird. Eine derartige Befehlsfolge könnte z.B. wie folgt aussehen:

1. Index suchen und Zeitüberwachung aktivieren
2. Übertakten von n Bytes
3. Sync-Byte suchen, Zeitüberwachung aktivieren
4. Lesen ohne D-FIFO-Eintrag mit ECC-Prüfung, 1 Byte
5. Lesen mit D-FIFO-Eintrag mit ECC-Prüfung, 8 Bytes
6. Lesen ohne D-FIFO-Eintrag mit ECC-Prüfung, 7 Bytes, danach Unterbrechungssignal senden
7. Lesen mit D-FIFO-Eintrag ohne ECC-Prüfung, 1 Byte,
8. Übertakten von m-Bytes, letzter Befehl.

Nach dem Laden des Steuerwortpuffers OP-FIFO wird die Abarbeitung mit der C-BUS-Codierung OP-START begonnen. Zunächst wird der Steuerung C-OP-FIFO des Steuerwortpuffers OP-FIFO durch den Befehlsdecodierer DEC-OP-FIFO mitgeteilt, daß ein Suchbefehl bearbeitet wird, d.h. der nächste Befehl erst dann in Angriff genommen wird, wenn das Gesuchte, hier Index, gefunden ist. Für den Fall, daß der Datenlängenzähler DL-CTR während eines Suchbefehls auf Null gezählt wird, erfolgt kein Weiterschalten, weil dann ein Fehlerzustand gegeben ist. Nach Eintreffen des Suchergebnisses wird der Befehl Nr. 2 aktiviert, der dazu dient, eine bestimmte Zeit oder eine bestimmte Anzahl Bytes zu übertakten. Wenn jetzt der Datenlängenzähler DL-CTR auf Null steht, erfolgt eine Weiterschaltung zum nächsten, d.h. zum dritten Befehl. Dieser dritte Befehl läuft analog zum ersten Befehl ab, nur wird hier anstelle des Index sas Sync-Byte gesucht. Nach dem vierten Befehl wird ein Byte vom Magnetplattenspeicher gelesen und in die Fehlerkorrekturschaltung ECC geschrieben. Dieses eine Byte wird nicht in den Datenpuffer D-FIFO geschrieben und damit nicht zur Übertragung an die Zentraleinheit der Datenverarbeitungsanlage bereitgestellt. Im nächsten Befehl Nr. 5 werden acht Bytes gelesen, die sowohl in die Fehlerkorrekturschaltung ECC als auch in den Datenpuffer D-FIFO gelangen. Der sechste Befehl arbeitet weitgehend analog zu Befehl Nr. 4. Die Abweichung betrifft das Aussenden eines Unterbrechungssignals über die Unterbrechungssteuerung HIC. Mit Befehl Nr. 7 wird ein Byte gelesen und in den Datenpuffer D-FIFO eingeschrieben. Eine Prüfung in der Fehlerkorrekturschaltung ECC findet hier nicht statt. Der Befehl Nr. 8 läuft wie der Befehl Nr. 2 ab, d.h. es findet ein Übertakten von z.B. m-Bytes statt. Das Bit "letzter Befehl" bietet dabei die Möglichkeit, das Weiterschalten des Steuerwortpuffers OP-FIFO zu beenden.

5 Patentansprüche
1 Figur

Patentansprüche

1. Steuerschaltung für an eine Datenverarbeitungsanlage anschließbare Peripheriegeräte, insbesondere Magnetplattenspeicher, unter Verwendung von Schnittstellenregistern, die über ein Bus-System mit einem Prozessor der Datenverarbeitungsanlage, insbesondere mit einem Ein/Ausgabeprozessor verbunden sind, d a d u r c h g e k e n n z e i c h n e t , daß parallel zum Bus-System zwischen Bus und Schnittstelle ein Steuerwortpuffer (OP-FIFO) eingeschaltet ist, der in zeitunkritischen Phasen mit Steuerbefehlsfolgen belegbar ist, daß diese Steuerbefehlsfolgen synchron zum Arbeitstakt des jeweils zugeordneten Peripheriegerätes an die Schnittstelle übertragen werden und daß die direkte bzw. die unter Zwischenspeicherung im Steuerwortpuffer erfolgende indirekte Ansteuerung der Schnittstelle durch zwei Befehlsdecodierer bewirkt wird, von denen der eine (DEC-C-BUS) zwischen dem Steuerbus (C-BUS) des Bus-Systems und dem Eingang des Steuerwortpuffers (OP-FIFO) und der andere (DEC-OP-FIFO) zwischen dem Ausgang des Steuerwortpuffers (OP-FIFO) und einem im Bereich der Schnittstelle vorgesehenen Schaltmittel eingeschaltet ist.

2. Steuerschaltung nach Anspruch 1, d a d u r c h g e k e n n z e i c h n e t , daß das vom zweiten Befehlsdecodierer (DEC-OP-FIFO ) gesteuerte Schaltmittel als Multiplexer (MUX) ausgebildet ist, dessen beide Eingänge mit dem Daten-Bus (ID-BUS) bzw. mit dem Ausgang des Steuerwortpuffers (OP-FIFO) verbunden sind, während sein Ausgang mit dem Eingang eines Steuerregisters (REG) verbunden ist.

3. Steuerschaltung nach Anspruch 1 oder 2, d a - durch gekennzeichnet , daß durch
den zweiten Befehlsdecodierer (DEC-OP-FIFO eine
Schreib/Lese-Steuerung (SLC), eine Fehlerkorrektursteuerung (ECC) sowie eine Suchbefehls-Erkennungslogik
(IAS) ansteuerbar sind.

4. Steuerschaltung nach Anspruch 3, d a d u r c h
g e k e n n z e i c h n e t , daß der Schreib/Lese-
Steuerung (SLC) ein Datenpuffer (D-FIFO) zugeordnet
ist, in welchem die Lesedaten des Peripheriegerätes
zur späteren Weiterleitung über den Daten-Bus zwischenspeicherbar sind.

5. Steuerschaltung nach Anspruch 3 oder 4, d a -
d u r c h g e k e n n z e i c h n e t , daß zur
Abarbeitung der Befehlsfolgen aus dem Steuerwortpuffer
(OP-FIFO) eine Steuerung (C-OP-FIFO) mit zugeordnetem
Datenlängenzähler (DL-CTR) vorgesehen ist, die den
jeweils nächsten Befehl stets dann abruft, wenn die
im Befehlswort enthaltene Datenlänge im Datenlängenzähler (DL-CTR) auf Null heruntergezählt ist oder ein
Suchergebnis aus der Suchbefehls-Erkennungslogik (IAS)
eingetroffen ist.

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | PROCEEDINGS OF THE IEEE, Band 64, Nr. 6, Juni 1976, Seiten 860-872 New York, U.S.A. J.E. BASS: "A peripheral-oriented microcomputer system" | 1-4 |
| | * Seite 865, Spalte 1, Zeilen 22-31; Seite 866, Spalte 1, Zeilen 6-15; Spalte 2, Zeilen 1-9, Figur 10; Seite 867 und Figur 11; Seite 868, Spalte 1, Zeilen 6-19; Spalte 2, Zeilen 16-57; Seite 869, Spalte 1, Zeilen 5-53; Seite 870, Spalte 1, Zeilen 16-19; Seite 871, Spalte 1, Zeilen 1-8 * | |
| | -- | |
| | ELECTRONIC DESIGN, Band 26, Nr. 19, September 1978, Seiten 90-96 Rochelle, U.S.A. S. BAL et al.: "LSI controller makes it easier to tie a floppy drive to a computer" | 1,4,5 |
| | * Figur 1 auf Seite 91; Seite 92, Spalte 2, Zeilen 6-27; Seite 93, Spalte 2, Zeilen 19-39 * | |
| | -- | |
| | COMPUTER DESIGN, Band 18, Nr. 4, April 1979, Seiten 83-91 Concord, U.S.A. R.F. BINDER: "Designing a microprocessor driven multipurpose peripheral controller" | 1 |
| | * Seite 84, Spalte 1, Zeilen 5-21; Figur 1 * | |
| | -- | |
| | GB - A - 2 038 050 (BURROUGHS) | 1 |
| | * Seite 1, Zeilen 101-125; ./. | |

**KLASSIFIKATION DER ANMELDUNG (Int. Cl.³)**

G 06 F 3/04
3/06

**RECHERCHIERTE SACHGEBIETE (Int. Cl.³)**

G 06 F 3/04
3/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-11-1981 | DHEERE |

EPA form 1503.1   06.78

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | Seite 3, Zeilen 35-50; Seite 6, Zeilen 13-83; Seite 9, Zeilen 17-34; Figuren 2,7 * | |
| | ---- | |

KLASSIFIKATION DER ANMELDUNG (Int.Cl. ³)

RECHERCHIERTE SACHGEBIETE (Int. Cl. ³)